# EUROPÄISCHE PATENTSCHRIFT

(11) **EP 1 912 337 B1**
(45) Veröffentlichungstag und Bekanntmachung des Hinweises auf die Patenterteilung: **15.08.2012**
(21) Anmeldenummer: 07017923.9
(22) Anmeldetag: 13.09.2007
(51) Int. Cl.: H04B 1/20, G08B 3/10

(54) **Unterputz-Radio für den Empfang und die Wiedergabe von Rundfunksignalen**
In-wall radio for receiving and reproducing radio signals
Radio encastrée pour la réception et la retransmission de signaux radio

(30) Priorität: 13.10.2006 DE 102006048540
(43) Veröffentlichungstag der Anmeldung: 16.04.2008
(73) Patentinhaber: ABB AG, 68309 Mannheim (DE)
(72) Erfinder: Georgi, Dieter, 58313 Herdecke (DE); Schallenberg, Wolfgang, 40599 Düsseldorf (DE); Wieske, Stefan, 58285 Gevelsberg (DE); Wilms, Benjamin, 58802 Balve (DE); Zapp, Robert, 58579 Schalksmühle (DE)

(56) Entgegenhaltungen:
- EP-A1- 1 199 824
- EP-A1- 1 289 144
- WO-A1-2005/099139
- DE-A1- 10 112 673
- DE-A1- 10 328 469
- DE-U1- 20 116 556

## Beschreibung

Die Erfindung bezieht sich auf ein Unterputz-Radio für den Empfang und die Wiedergabe von Rundfunksignalen gemäß dem Oberbegriff des Anspruchs 1.

Aus der DE 201 16 556 U1 ist eine Empfangs- und Wiedergabeeinrichtung für Rundfunk- und/oder Fernsehsignale bekannt, bestehend aus Spannungsversorgungsmitteln, Signal-Empfängermitteln, Verstärkermitteln, Steuermitteln und Signal-Wiedergabemitteln. Zumindest die Spannungsversorgungsmittel oder die Empfängermittel bilden ein Hauptmodul, welches nach Art eines Elektroinstallationsgerätes eines üblichen Gebäudeinstallationssystems aus einem sockelartigen, in eine normgemäße Elektro-Installationsdose (Unterputz-Gerätedose) einsetzbaren Einsatzkörper besteht. Zumindest die Steuermittel oder die Signal-Wiedergabemittel sind als gesondertes Nebenmodul elektrisch und mechanisch mit dem Hauptmodul verbindbar (aufsteckbar). Die beiden Hauptmodule (Versorgungsmodul, Empfängermodul) sind in unmittelbar benachbarte einzelne Gerätedosen (Installationsgeräte-Zweierkombination, Zweierdose) einsetzbar und elektrisch über einen vorkonfektionierten Leitungssatz miteinander verbindbar. Als Steuermittel sind mehrere Drucktaster/Betätigungswippen sowie optische Signalelemente (LED) verwendet.

Der Erfindung liegt die Aufgabe zugrunde, ein für unterschiedliche Anwendungen nutzbares Unterputz-Radio für den Empfang und die Wiedergabe von Rundfunksignalen anzugeben.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass für den Einbau des Unterputz-Radios inklusive Verstärker und Lautsprecher lediglich eine einzige Unterputz-Gerätedose erforderlich ist. Außer empfangenen Radiosignalen können z. B. MP3-Audiodateien unterschiedlicher Träger (Medien) sowie aufgesprochene Sprachinformationen wiedergegeben werden. Das Unterputz-Radio ist sowohl als Einzelgerät als auch als Zentrale eines Audio-Systems einsetzbar.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Sicht auf die Frontseite eines Unterputz-Radios für den Einbau in eine Unterputz-Gerätedose,
- Fig. 2: eine schematische Darstellung der möglichen Audio-Wiedergabequellen des Unterputz-Radios,
- Fig. 3: den prinzipiellen Aufbau eines zur Beschallung unterschiedlicher Räume geeigneten Audio-Systems unter Verwendung eines Unterputz-Radios für den Einbau in eine Unterputz-Gerätedose.

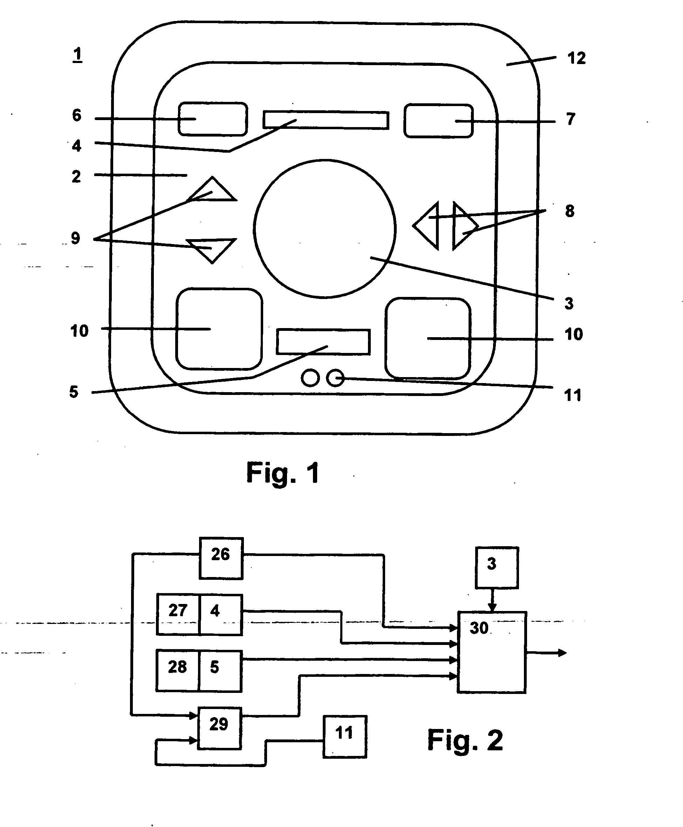

In Fig. 1 ist eine Sicht auf die Frontseite eines Unterputz-Radios für den Einbau in eine Unterputz-Gerätedose dargestellt. Das Unterputz-Radio 1 weist einen für den Einbau in eine Unterputz-Gerätedose geeigneten zentralen Geräteeinsatz 2 inklusive Tragring und einen äußeren Abdeckrahmen 12 auf. Der Geräteeinsatz 2 beinhaltet unter anderem ein Netzteil mit 230 V Netzeingang, einen Stereo-Radiotuner (FM-Tuner, siehe Ziffer 26 in Fig. 2), einen Verstärker und mindestens einen Lautsprecher. Frontseitig weist der Geräteeinsatz 2 folgende Komponenten auf:
- ein in Form eines multifunktionalen Umschalters bzw. Joysticks ausgebildetes Bedienelement 3,
- einen Kartenslot 4,
- einen USB-Eingang 5,
- eine Stationsanzeige 6,
- eine Betriebsart-Anzeige 7 (Anzeige der aktuell aktivierten Audio-Wiedergabequelle),
- eine LINKS/RECHTS-Anzeige 8 für eine Bedienelement-Funktion, welche eine bestimmte momentane Betätigung des Bedienelements 3, hier Schwenken/Tippen nach links oder rechts anzeigt bzw. bestätigt,
- eine AUF/AB-Anzeige 9 für eine Bedienelement-Funktion, welche eine bestimmte momentane Betätigung des Bedienelements 3, hier Schwenken/Tippen nach oben oder unten anzeigt bzw. bestätigt,
- Schallaustrittslöcher 10, wobei im Bodenteil des Geräteeinsatzes 2 mindestens ein Lautsprecher montiert ist und der Schall über Schalltrichter und die Schallaustrittslöcher 10 nach außen abgestrahlt wird,
- ein Mikrofon 11 zum Aufsprechen von Sprachinformationen.

Optional können gemäß einer einfacheren Ausführungsform LINKS/RECHTS-Symbole und/oder AUF/AB-Symbole an Stelle der Anzeigen 8 und/oder 9 als Aufdruck für die Bedienung des Bedienelements 3 vorgesehen sein.

Wie bereits aus der vorstehenden Beschreibung hervorgeht und schematisch in Fig. 2 gezeigt ist, sind beim Unterputz-Radio 1 mehrere Audio-Wiedergabequellen (Betriebsart, Modus) vorgesehen und können über das Bedienelement 3 ausgewählt werden:
- Wiedergabemöglichkeit über Stereo-Radiotuner 26 mit unterschiedlichen FM-Kanälen,
- Wiedergabemöglichkeit über eine SD-Karte 27, welche im Kartenslot 4 eingesteckt ist und auf welcher z. B. Audio-Dateien im MP3-Datenformat oder über das Mikrofon 11 aufgesprochene Sprachinformationen abgespeichert sind,
- Wiedergabemöglichkeit über einen USB-Stick 28, welcher im USB-Eingang 5 eingesteckt ist und auf welchem z. B. Audio-Dateien im MP3-Datenformat oder über das Mikrofon 11 aufgesprochene Sprachinformationen abgespeichert sind,
- Wiedergabemöglichkeit über einen internen Speicher 29, welcher zur Abspeicherung von Nachrichten dient, wie z. B. Abspeicherung der letzten Verkehrsnachricht eines bestimmten vorgewählten FM-Kanals des Stereo-Radiotuners 26 oder Abspeicherung einer unter Verwendung des Mikrofons 11 aufgesprochenen Sprachinformation.

Die Audio-Wiedergabequellen Stereo-Radiotuner 26, SD-Karte 27, USB-Stick 28 und interner Speicher 29 leiten ihre Datensignale an ein Steuergerät 30, welches mittels des Bedienelements 3 angesteuert wird, wobei das Steuergerät 30 die ausgewählten Audiosignale ausgangsseitig an einen Verstärker mit angeschlossenem Lautsprecher (bzw. angeschlossenen Lautsprechern) abgibt.

Das Bedienelement 3 lässt beispielsweise folgende unterschiedlichen Funktionen zu:

| EIN/AUS | auf das Bedienelement drücken |
|---|---|
| Auswahl der Audio-Wiedergabequelle (Modus, Betriebsart) | das Bedienelement nach links/rechts schwenken/tippen: sukzessive Anwahl von unterschiedlichen Radio-Kanälen FM1, FM2, interne Aufzeichnung von Sprachinformation oder von über einen Radio-Kanal erhaltener Information (z. B. Verkehrs-Info, Wetter-Info), USB-Stick, SD-Karte |
| Suchlauf eines Radiokanals | das Bedienelement auf/ab schwenken/tippen, möglich bei Anwahl von FM-Modus, Stationsanzeige 6 zeigt dabei den aktuellen FM-Kanal |
| Titelwahl | das Bedienelement auf/ab schwenken/tippen, möglich bei Anwahl einer Audio-Wiedergabequelle SD-Karte oder USB-Stick |
| Lautstärke | Drehen des Bedienelements |
| Aufnahme über Radio auf SD-Karte oder USB-Stick oder internen Speicher | auf das Bedienelement in der Betriebsart FM lange drücken (d. h. z. B. länger als 5 Sekunden) → Speicherung auf eingestecktes Medium (SD-Karte oder USB-Stick) oder auf internen Speicher 29 |
| Aufnahme über Mikrofon 11 auf SD-Karte, USB-Stick oder internen Speicher | auf das Bedienelement in der Betriebsart SD-Karte oder USB-Stick (ohne SD-Karte und USB-Stick automatisch interner Speicher) lange drücken (d. h. z. B. länger als 5 Sekunden) → Speicherung auf eingestecktes Medium (SD-Karte oder USB-Stick) oder auf internen Speicher 29. Aufgesprochene Nachrichten können z. B. über blinkende LEDs signalisiert werden. |

Vorstehend ist insbesondere der Anwendungsfall "Einzelgerät", d. h. eine "Einfachvariante" bzw. eine für einen einzigen Raum geeignete "Insellösung" beschrieben. Optional kann das Unterputz-Radio 1 jedoch auch funktioneller Baustein eines mehrere Räume beschallenden Audio-Systems sein, wie nachstehend beschrieben.

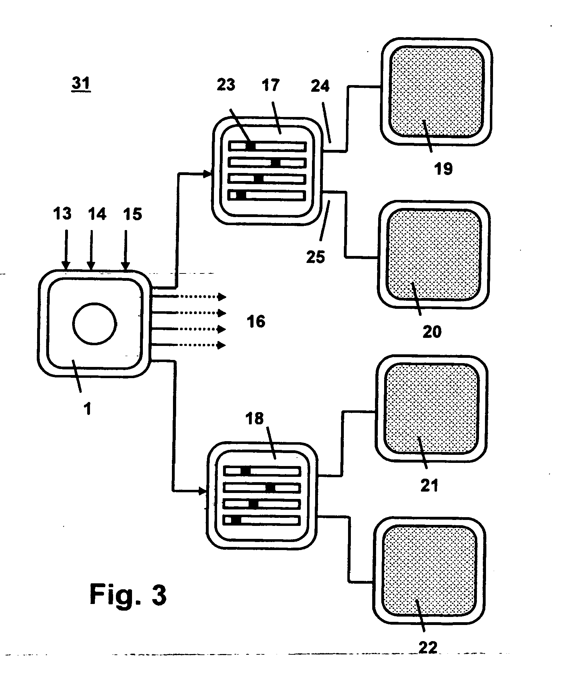

In Fig. 3 ist der prinzipielle Aufbau eines zur Beschallung unterschiedlicher Räume geeigneten Audio-Systems 31 unter Verwendung eines Unterputz-Radios für den Einbau in eine Unterputz-Gerätedose dargestellt. Das Unterputz-Radio 1 dient hier als System-Zentrale zur Versorgung von mehreren, hier z. B. zwei Verstärker-Einsätzen 17, 18, welche jeweils in einer Unterputz-Gerätedose eingebaut sind. Jeder Verstärker-Einsatz 17 bzw. 18 befindet sich in einem eigenen Raum und versorgt je zwei Lautsprecher-Einsätze 19, 20 bzw. 21, 22, welche jeweils für den Einbau in eine Unterputz-Gerätedose geeignet sind. Dementsprechend weist das Unterputz-Radio 1 auf:
- einen Eingang 13 für Netzeinspeisung,
- einen Anschluss 14 für eine zentrale Hausantenne,
- einen Anschluss 15 für eine Stereoanlage,
- mehrere Ausgänge 16 zum Anschluss von Verstärker-Einsätzen.

Jeder Verstärker-Einsatz 17, 18 weist auf:
- einen Eingang zur Verbindung mit dem Unterputz-Radio 1,
- zwei Lautsprecher-Anschlüsse 24, 25 für die Verbindung mit Lautsprecher-Einsätzen 19, 20 bzw. 21, 22,
- einen individuellen Lautstärke- und Klangregler 23.

Wie aus den vorstehenden Erläuterungen der Ausführungsbeispiele hervorgeht, ist das Unterputz-Radio 1 universal als System-Zentrale eines Audio-Systems einsetzbar und auch als Einzelgerät verwendbar, wenn lediglich ein einziger Raum zu versorgen ist:
- Beim Anwendungsfall "Einzelgerät" sind Verstärker, Lautstärkeregler (über Bedienelement 3) sowie Lautsprecher des Unterputz-Radios 1 aktiviert. Die Anschlüsse 16 bleiben offen.
- Beim Anwendungsfall "System-Zentrale beim Audio-System" sind mehrere Verstärker-Einsätze mit den Anschlüssen 16 verbunden und Verstärker inklusive Lautstärkeregler sowie Lautsprecher des Unterputz-Radios 1 sind vorzugsweise deaktiviert.

### Bezugszeichenliste:

- 1: Unterputz-Radio
- 2: Geräteeinsatz
- 3: Bedienelement
- 4: Kartenslot
- 5: USB-Eingang
- 6: Stationsanzeige
- 7: Betriebsart-Anzeige
- 8: LINKS/RECHTS-Anzeige für Bedienelement-Funktion
- 9: AUF/AB-Anzeige für Bedienelement-Funktion
- 10: Schallaustrittslöcher
- 11: Mikrofon
- 12: Abdeckrahmen
- 13: Eingang für Netzeinspeisung
- 14: Anschluss für Hausantenne
- 15: Anschluss für Stereoanlage
- 16: Ausgänge zum Anschluss von Verstärker-Einsätzen
- 17: Verstärker-Einsatz
- 18: Verstärker-Einsatz
- 19: Lautsprecher-Einsatz
- 20: Lautsprecher-Einsatz
- 21: Lautsprecher-Einsatz
- 22: Lautsprecher-Einsatz
- 23: Lautstärke- und Klangregler
- 24: Lautsprecher-Anschluss
- 25: Lautsprecher-Anschluss
- 26: Stereo-Radiotuner
- 27: SD-Karte
- 28: USB-Stick
- 29: interner Speicher
- 30: Steuergerät
- 31: Audio-System

## Patentansprüche

1. Unterputz-Radio (1) für den Empfang und die Wiedergabe von Rundfunksignalen, bestehend aus einem in eine Unterputz-Gerätedose einbaubarem Geräteeinsatz (2) inklusive Tragring und Abdeckrahmen (12), wobei im Geräteeinsatz (2) ein Netzteil, ein Stereo-Radiotuner (26), mindestens ein Bedienelement (3), ein Verstärker und mindestens ein Lautsprecher vorgesehen sind, **dadurch gekennzeichnet,**
- **dass** für die Bildung weiterer Audio-Wiedergabequellen ein Kartenslot (4) zum Einstecken einer SD-Karte (27) und ein USB-Eingang (5) zum Einstecken eines USB-Sticks (28) vorgesehen sind, wobei die gewünschte Audio-Wiedergabequelle über das Bedienelement (3) auswählbar und über ein Steuergerät-(30) aktivierbar ist,
- **dass** das Bedienelement (3) in Form eines multifunktionalen Umschalters bzw. Joysticks ausgebildet ist, welcher nach links/rechts und auf/ab schwenkbar ist,
- **dass** der von einem im Bodenteil des Geräteseinsatzes (2) angeordneten Lautsprecher produzierte Schall über Schalltrichter und Schallaustrittslöcher (10) nach außen geführt wird.

2. Unterputz-Radio nach Anspruch 1, **dadurch gekennzeichnet, dass** über den Stereo-Radiotuner (26) erhaltene Informationen unter Verwendung einer SD-Karte (27) oder eines USB-Sticks (28) oder eines internen Speichers (29) abspeicherbar und als weitere gewünschte Audio-Wiedergabequelle über das Bedienelement (3) auswählbar sind.

3. Unterputz-Radio nach Anspruch 1 oder 2, **dadurch gekennzeichnet, dass** Sprachinformationen über ein Mikrofon (11) aufsprechbar, unter Verwendung einer SD-Karte (27) oder eines USB-Sticks (28) oder eines internen Speichers (29) abspeicherbar und als weitere gewünschte Audio-Wiedergabequelle über das Bedienelement (3) auswählbar sind.

4. Unterputz-Radio nach einem der vorstehenden Ansprüche, **dadurch gekennzeichnet, dass** ein Anschluss (15) für eine als weitere Audio-Wiedergabequelle auswählbare Stereoanlage vorgesehen ist.

5. Unterputz-Radio nach einem der vorstehenden Ansprüche, **dadurch gekennzeichnet, dass** ein Anschluss (14) für eine zentrale Hausantenne vorgesehen ist.

6. Unterputz-Radio nach einem der vorstehenden Ansprüche, **dadurch gekennzeichnet, dass** eine LINKS/RECHTS-Anzeige (8) vorgesehen ist, welche ein Schwenken/Tippen des Bedienelements (3) nach links oder rechts anzeigt.

7. Unterputz-Radio nach einem der vorstehenden Ansprüche, **dadurch gekennzeichnet, dass** eine AUF/AB-Anzeige (9) vorgesehen ist, welche ein Schwenken/Tippen des Bedienelements (3) nach oben oder unten anzeigt.

8. Unterputz-Radio nach einem der vorstehenden Ansprüche, **dadurch gekennzeichnet, dass** eine Betriebsart-Anzeige (7) für die Anzeige der aktuell ausgewählten Audio-Wiedergabequelle vorgesehen ist.

9. Unterputz-Radio nach einem der vorstehenden Ansprüche, **dadurch gekennzeichnet, dass** eine Stationsanzeige (6) vorgesehen ist.

10. Unterputz-Radio nach einem der vorstehenden Ansprüche **dadurch gekennzeichnet, dass** das Unterputz-Radio für die Bildung eines Audio-Systems (31) Ausgänge (16) zum-Anschluss von separaten, für den Einbau in eine Unterputz-Gerätedose geeigneten Verstärker-Einsätzen (17, 18) vorgesehen sind, welche jeweils Lautstärkeregler (23) aufweisen.

11. Unterputz-Radio nach Anspruch 10, **dadurch gekennzeichnet, dass** ein Verstärker-Einsatz (17, 18) Lautsprecher-Anschlüsse (24, 25) zum Anschluss separater, für den Einbau in eine Unterputz-Gerätedose geeigneter Lautsprecher-Einsätze (19, 20, 21, 22) aufweist.

## Claims

1. A flush-mounted radio (1) for receiving and reproducing radio signals, consisting of a device insert (2) which can be installed in a flush-mounted device box, including a support ring and a cover frame (12), with a power unit, a stereo radio tuner (26), at least one control element (3), an amplifier and at least one loudspeaker being provided in the device insert (2), **characterized in that**
- for forming further audio reproduction sources a card slot (4) is provided for inserting an SD card (27) and a USB input (5) for inserting a USB stick (28), with the desired audio reproduction source being selectable via the control element (3) and being activatable via a control device (30);
- the control element (3) is arranged in form of a multifunctional changeover switch or joystick which can be pivoted to the left/right and up/down;
- the sound produced by a loudspeaker arranged in the bottom part of the device insert (2) is guided to the outside via mouth pieces and sound outlet holes (10).

2. A flush-mounted radio according to claim 1, **characterized in that** information obtained via the stereo radio tuner (26) can be saved by using an SD card (27) or a USB stick (28) or an internal memory (29) and can be selected as a further desired audio reproduction source via the control element (3).

3. A flush-mounted radio according to claim 1 or 2, **characterized in that** voice information can be recorded via a microphone (11) by using an SD card (27) or a USB stick (28) or an internal memory (29) and can be selected as a further desired audio reproduction source via the control element (3).

4. A flush-mounted radio according to one of the preceding claims, **characterized in that** a connection (15) is provided for a stereo unit which can be selected as a further audio reproduction source.

5. A flush-mounted radio according to one of the preceding claims, **characterized in that** a connection (14) for a central house antenna is provided.

6. A flush-mounted radio according to one of the preceding claims, **characterized in that** a LEFT/RIGHT display (8) is provided which indicates a pivoting/jogging of the control element (3) to the left or right.

7. A flush-mounted radio according to one of the preceding claims, **characterized in that** an UP/DOWN display (9) is provided which indicates a pivoting/jogging of the control element (3) upwardly or downwardly.

8. A flush-mounted radio according to one of the preceding claims, **characterized in that** an operating mode display (7) is provided for the display of the currently selected audio reproduction source.

9. A flush-mounted radio according to one of the preceding claims, **characterized in that** a station display (6) is provided.

10. A flush-mounted radio according to one of the preceding claims, **characterized in that** for the formation of an audio system (31) the flush-mounted radio comprises outputs (16) for the connection of separate amplifier inserts (17, 18) suitable for installation in a flush-mounted device box, which inserts respectively comprise volume controls (23).

11. A flush-mounted radio according to claim 10, **characterized in that** an amplifier insert (17, 18) comprises loudspeaker connections (24, 25) for the connection of separate loudspeaker inserts (19, 20, 21, 22) which are suitable for the installation in a flush-mounted device box.

## Revendications

1. Appareil de radio sous enduit (1) pour la réception et la retransmission de signaux radio, composée d'un insert d'appareil (2) pouvant être monté dans un boîtier d'appareil, avec une bague de support et un cadre de couverture (12), lequel insert d'appareil (2) comporte un bloc secteur, un tuner radio stéréo (26), au moins un élément de commande (3), un amplificateur et au moins un haut-parleur, **caractérisé en ce que** :
- il est prévu pour former d'autres sources de retransmission audio une fente à carte (4) pour l'insertion d'une carte de mémoire SD (27) et une entrée USB (5) pour l'insertion d'une clé USB (28), la source de retransmission audio souhaitée pouvant être sélectionnée à l'aide de l'élément de commande (3) et activée par une unité de commande (30) ;
- **en ce que** l'élément de commande (3) est conçu sous la forme d'un commutateur multifonction ou d'un joystick qui peut être dévié vers la gauche ou la droite et vers le haut ou le bas ;
- **en ce que** le son produit par le haut-parleur disposé dans une partie de fond de l'insert d'appareil (2) est guidé vers l'extérieur par des diffuseurs et des trous de sortie du son (10).

2. Appareil de radio sous enduit selon la revendication 1, **caractérisé en ce que** les informations reçues par l'intermédiaire du tuner radio stéréo (26) peuvent être sauvegardées à l'aide d'une carte de mémoire SD (27) ou d'une clé USB (28) ou d'une mémoire interne (29) et peuvent être sélectionnées comme autre source de retransmission audio souhaitée à l'aide de l'élément de commande (3).

3. Appareil de radio sous enduit selon la revendication 1 ou 2, **caractérisé en ce que** des informations vocales peuvent être transmises à l'aide d'un microphone (11), sauvegardées à l'aide d'une carte de mémoire SD (27) ou d'une clé USB (28) ou d'une mémoire interne (29) et sélectionnées comme autre source de retransmission audio à l'aide de l'élément de commande (3).

4. Appareil de radio sous enduit selon l'une des revendications précédentes, **caractérisé en ce qu'**un branchement (15) est prévu pour une installation stéréo pouvant être sélectionnée comme autre source de retransmission audio.

5. Appareil de radio sous enduit selon l'une des revendications précédentes, **caractérisé en ce qu'**un branchement (14) est prévu pour une antenne centrale du bâtiment.

6. Appareil de radio sous enduit selon l'une des revendications précédentes, **caractérisé en ce qu'**il est prévu un indicateur GAUCHE/DROITE (8) qui indique que l'élément de commande (3) est dévié ou basculé vers la gauche ou la droite.

7. Appareil de radio sous enduit selon l'une des revendications précédentes, **caractérisé en ce qu'**il est prévu un indicateur HAUTBAS( 9) qui indique que l'élément de commande (3) est dévié ou basculé vers le haut ou le bas.

8. Appareil de radio sous enduit selon l'une des revendications précédentes, **caractérisé en ce qu'**un indicateur de mode de fonctionnement (7) est prévu pour indiquer la source de retransmission audio sélectionnée.

9. Appareil de radio sous enduit selon l'une des revendications précédentes, **caractérisé en ce qu'**un affichage de la station de radio (6) est prévu.

10. Appareil de radio sous enduit selon l'une des revendications précédentes, **caractérisé en ce que** la radio sous enduit comporte, pour former un système audio (31), des sorties (16) pour le raccordement d'inserts d'amplificateur (17, 18) séparés pouvant être montés dans une boîte d'appareillage sous enduit, qui présentent chacun des réglages du volume sonore (23).

11. Appareil de radio sous enduit selon la revendication 10, **caractérisé en ce qu'**un insert d'amplificateur (17, 18) présente des branchements de haut-parleur (24, 25) pour le raccordement d'inserts de haut-parleur (19, 20, 21, 22) séparés pouvant être montés dans une boîte d'appareillage sous enduit.
